# EUROPEAN PATENT APPLICATION

(11) **EP 1 047 149 A2**
(43) Date of publication of application: **25.10.2000**
(21) Application number: 00108020.9
(22) Date of filing: 19.04.2000
(51) Int. Cl.: H01P 5/02

(54) **Signal transmitting/receiving apparatus**

(30) Priority: 21.04.1999 JP 11326599
(71) Applicant: MATSUSHITA ELECTRIC INDUSTRIAL CO., LTD., Kadoma-shi, Osaka 571-8501 (JP)
(72) Inventor: Yamauchi, Hiroyuki, Takatsuki-shi, Osaka 569-0011 (JP); Yoshida, Tadahiro, Mishimagun, Osaka 681-0001 (JP)
(74) Representative: Schwabe - Sandmair - Marx

(57) **Abstract**

A signal transmitting/receiving apparatus according to the present invention includes: a transmitting device for transmitting data; a receiving device for receiving the data; a data line for transmitting the data; and a supply line for transmitting a bias voltage for determining a voltage of the data line, wherein the transmitting device and the receiving device are connected to each other through the data line and the supply line, the transmitting device including: a driver circuit for outputting the data to the data line; and a bias generating means for generating the bias voltage and outputting the bias voltage to the supply line, the receiving device including: a terminating resistor connected to the data line; and a receiver circuit for detecting the data from the data line, wherein the data line is connected to the supply line via the terminating resistor.

## Description

### BACKGROUND OF THE INVENTION

### 1. FIELD OF THE INVENTION:

The present invention relates to an apparatus for transmitting/receiving signals between appliances or chips, and more specifically the present invention is suitable for a signal transmitting/receiving apparatus which requires a stable data transmission/reception using cables and flexible substrates even if supply voltages and ground voltages are different between a transmitting apparatus and a receiving apparatus such as in the cage where signals are transmitted/received between devices (e.g., LSI or IC) mounted on a board, between different boards in an appliance, or between different appliances.

### 2. DESCRIPTION OF THE RELATED ART:

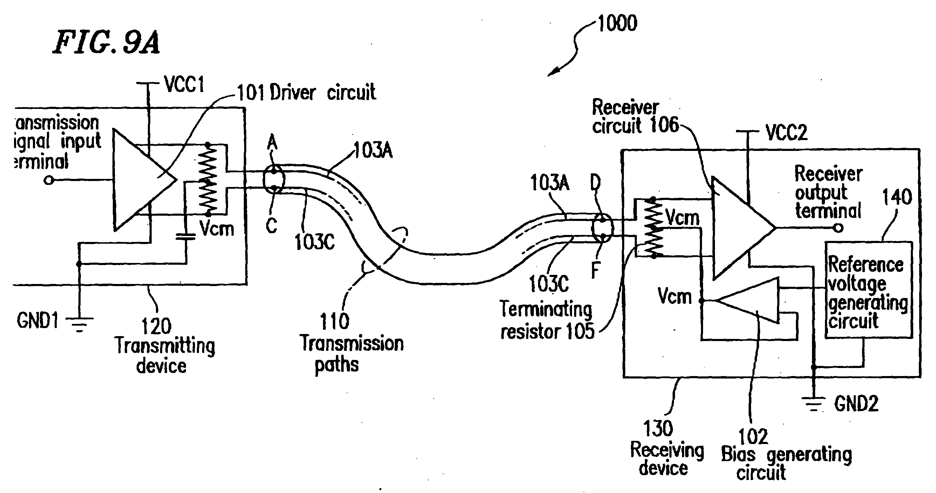

In conventional signal transmission/reception, e.g., differential transmission, waveform irregularities such as reflection is prevented by impedance match between transmission paths, as in a signal transmitting/receiving apparatus **1000** shown in Figure **9A**. In order to achieve this impedance match, a receiving device **130** is provided with: a terminating resistor **105** for short circuiting a pair of differential lines **103A** and **103C** (i.e., data lines); and a bias generating circuit **102** for determining an intermediate potential between differential potentials, where the output of the bias generating circuit **102** is connected at a midpoint of the terminating resistor **105**. This will set the intermediate potential of the pair of differential lines **103A** and **103C** to Vcm, which is a bias voltage output from the bias generating circuit **102**, whereby the problem of waveform irregularities such as the reflection between the pair of differential lines **103A** and **103C** is solved. In the case where the difference between a supply voltage VCC1 of a transmitting device **120** and a supply voltage VCC2 of a receiving device **130** and the difference between a ground voltage GND1 of the transmitting device **120** and a ground voltage GND2 of the receiving device **130** are not large, the intermediate potential between the pair of the differential lines **103A** and **103C** of a transmitting device **120** is also around Vcm.

The amplitude potential of the pair of differential lines **103A** and **103C** is determined by a value of a current flowing through the differential lines **103A** and **103C**, and by a value of the terminating resistor **105**. Since the impedance of the differential lines **103A** and **103C** is usually 110 Ω, the value of the terminating resistor **105** is also set to 110 Ω for impedance matching. Thus, when a driver circuit **101** of the transmitting device **120** applies a 2 mA current to the transmission path **110**, the amplitude voltage of the differential lines **103A** and **103C** will be 220 mV. If the bias potential is 2.0 V, the higher potential of the differential lines **103A** and **103C** will be 2.11 V (2.0 V + 220 mV/2), and the lower potential of the differential lines **103A** and **103C** will be 1.89 V (2.0 V - 220 mV/2).

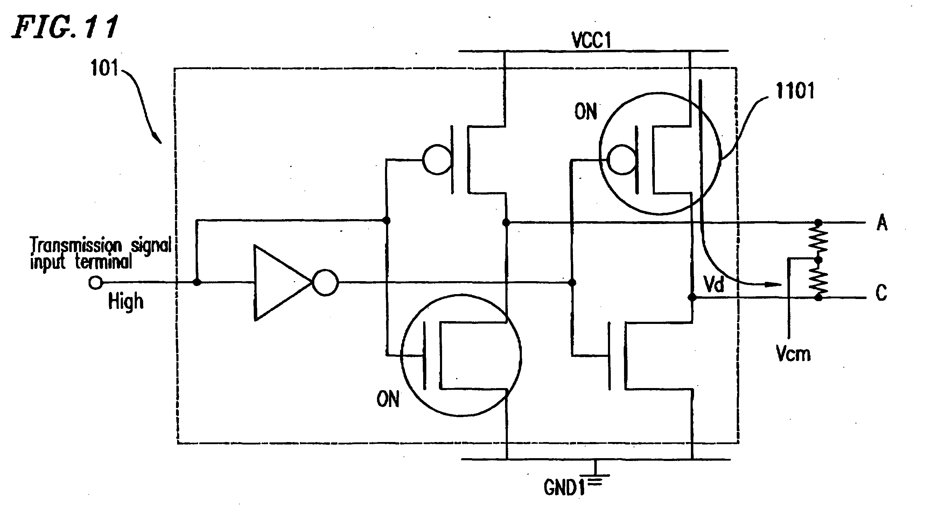

Therefore, if the driver circuit **101** of the transmitting device **120** applies a stable 2 mA current to the higher output terminal (2.11 V) of output terminals **A** and **C**, data can be transmitted efficiently at a high-speed of 400 MHz or greater in the form of a small amplitude transmission of 220 mV. If the supply potential VCC1 of the driver circuit **101** is sufficiently higher than the potential of the higher output terminal (the potential corresponding to Vd of the driver circuit **101** in Figure 11 is 2.11 V), a current can be applied from a PMOS transistor **1101** in a driver circuit **101** (as shown in Figure **11**) to the output terminal **A** or **C**. Therefore, data can be transmitted efficiently at a high-speed of 400 MHz or greater in the form of a small amplitude transmission of 220 mV, as mentioned above.

However, in the case where the difference between the supply voltage VCC1 of the transmitting device **120** and the supply voltage VCC2 of the receiving device **130**, and the difference between the ground voltage GND1 of the transmitting device **120** and the ground voltage GND2 of the receiving device **130** are relatively large, the potentials of the output terminals **A** and **C** of the driver circuit **101** of the transmitting device **120** (i.e., the potential of the transmission paths **110**) may become infinitely close to the supply voltage VCC1 of the driver circuit **101**, or even higher than the supply voltage VCC1 of the driver circuit **101**, thereby making it difficult or impossible to apply a current from the driver circuit **101** to the transmission path **110**. In other words, such a state causes a problem of not being able to transmit data.

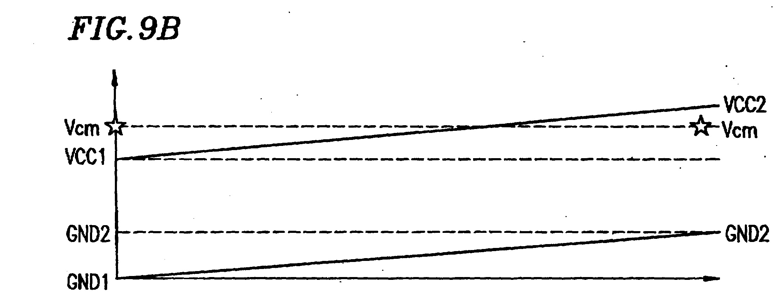

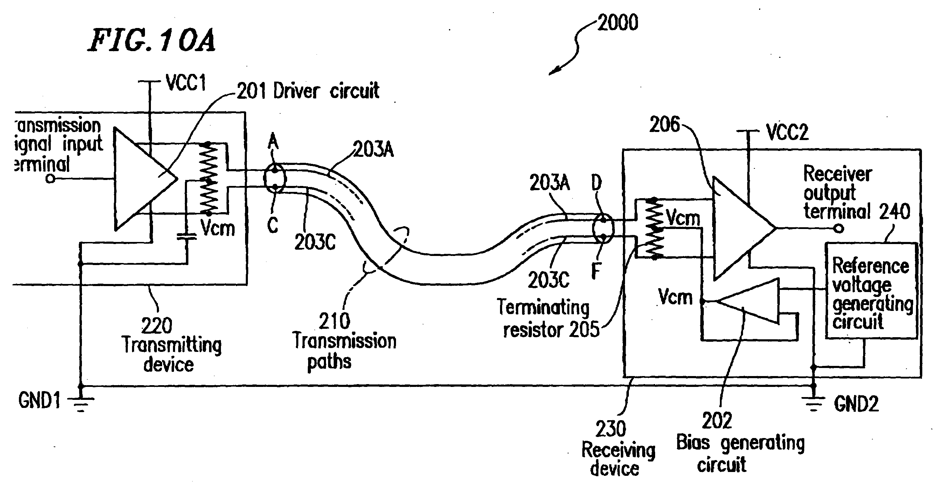

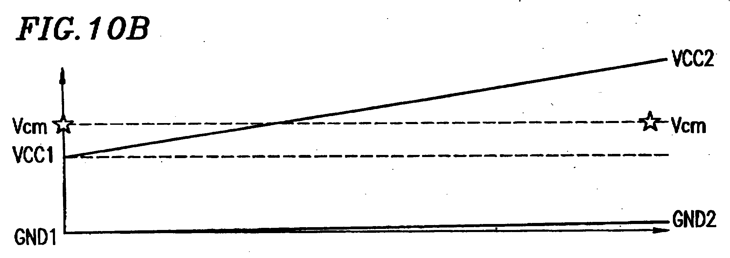

Figure **9B** illustrates the problem caused by the difference between the ground potential GND1 of the transmitting device **120** and the ground potential GND2 of the receiving device **130** in the signal transmitting/receiving circuit **1000** shown in Figure **9A**. Figure **10B** illustrates the problem caused by the difference between a supply voltage VCC1 of a transmitting device **220** and a supply voltage VCC2 of a receiving device **230** in a signal transmitting/receiving circuit **2000** as shown in Figure **10A**. These problems will now be more specifically described in reference to Figures **9A** through **10B**.

Figures **9A** and **9B** show the case where the ground potential GND1 of the transmitting device **120** and the ground potential GND2 of the receiving device **130** are different. More specifically, it is assumed that the ground potential GND2 of the receiving device **130** is higher than the ground potential GND1 of the transmitting device **120**. In this case, as shown in Figure **9B**, if the intermediate potential Vcm of the pair of differential lines **103A** and **103C** becomes higher than the, supply voltage VCC1 of the driver circuit **101** of the transmitting device **120**, it is impossible to apply a current. This difference between the ground potentials (GND2 - GND1) is prone to occur when data is transmitted/received between different appliances grounded at different sites. A typical example of this is the case where the transmitting device **120** is a floor model VCR whose power is supplied from an outlet. In such a case, the ground potential GND1 is determined by the ground potential of the outlet. If the corresponding receiving device **130** is a video camera operating on an internal battery, the ground of the video camera is only connected to the housing of the video camera. Therefore, the ground of the camera will be a ground potential GND2, which may inevitably be different from the ground potential of the outlet. In the case where the power is supplied from such a floor model VCR to such a video camera via a cable (esp. IEEE 1394 and the like), the ground potential GND2 of the video camera may become about 0.5 V to 1.0 V higher than the ground potential GND1 of the floor model VCR (i.e., $\text{GND2 = GND1 + 0.5 V to 1.0 V}$) due to the cable resistance.

In this case, the intermediate potential Vcm generated by the receiving device **130** appears higher (e.g., 0.5 V to 1.0 V) than the ground potential GND1 of the transmitting device **120**, with a general tendency as shown in Figure **9B**. For example, if the intermediate potential is set at 2.0 V in the receiving device **130**, it will become 2.5 V to 3.0 V in the transmitting device **120**. If the supply voltage VCC1 of the driver circuit **101** in the transmitting device **120** is set at 2.5 V, the potential Vd shown in Figure **11** will be, for example, 2.61 V to 3.11 V, which means VCC1 ≦ Vd. Therefore, a problem exists when the PMOS transistor **1101** shown in Figure **11** is not able to apply a current to the output terminals **A** and **C**.

Figure **10A** shows the case where the supply voltage VCC1 of the transmitting device **220** and the supply voltage VCC2 of the receiving device **230** are different. More specifically, it is assumed that the supply voltage VCC2 of the receiving device **230** is higher than the supply voltage VCC1 of the transmitting device **220**. In this case, as shown in Figure **10B**, the intermediate potential Vcm of the cable becomes higher than the supply voltage VCC1 of a driver circuit **201** in the transmitting device **220**, so that it is impossible to apply a current.

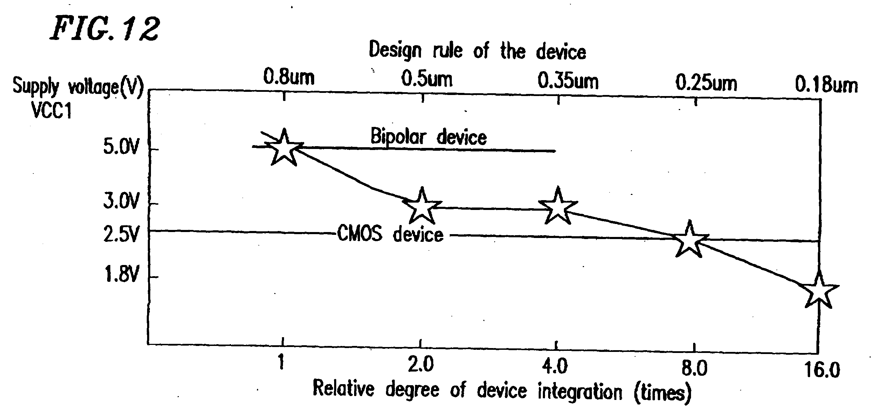

In a transmitting/receiving apparatus used for a digital video disc apparatus and the like (where a signal processing LSI corresponds to the transmitting device **220** and a servomotor controlling IC corresponds to the receiving device **230**), this difference between the supply voltages (VCC2 - VCC1) is inevitable from the system designing point of view. The most crucial reason for this is as follows: with a view to reducing the cost and the mounting area, there is a trend for developing highly integrated single-chip transmitting devices for utilizing the most recent device technologies. This, in turn, is because a signal processing LSI in a transmitting device can be implemented as digital circuits, so that the signal processing LSI can be mounted on a single chip together with a variety of other digital processing LSIs. Therefore, as shown in Figure **12**, the CMOS devices supply voltage has been reduced over generations, e.g., from 5.0 V to 3.0 V, 3.0 V to 2.5 V, 2.5 V to 1.8 V, and so on.

On the other hand, as to ICs for controlling a servomotor associated with a receiving device, their supply voltage has not been changed over generations, but rather has remained constant at 5.0 V. This is because such an IC is usually a bipolar device, which is an analog circuit formed of semiconductors for driving mechanical systems such as a servomotor. Moreover, since such an IC is seldom required to incorporate a new function in each product generation, its design is usually not changed for five years or so, once designed. Therefore, it is impractical to change the circuits in the receiving device. In view of such a trend, Figures **10A** and **10B** represent the case where the supply voltage VCC2 of the receiving device **230** is higher than the supply voltage VCC1 of the transmitting device **220**.

If the receiving device **230** is designed so that the intermediate potential Vcm is 1/2 of the supply voltage, then Vcm will be 2.5 V = (5 V × 1/2). Therefore, with reference to Figure **10B**, those skilled in the art will readily understand that the supply voltage VCC1 of the transmitting device **220** should be set lower than 3.3 V if the design rule is 0.25µm or less in order to achieve a high integration. If the design of the receiving circuit is changed each time the design of the transmitting circuit is changed, this problem can of course be solved to some degree. It is, however, impractical to reduce the product life of the IC only for the sake of redesigning the intermediate potential Vcm when there is no need to incorporate a new function, since it causes a cost increase. Moreover, in the case where only a low supply voltage is available to the transmitting device, the value of the intermediate potential Vcm may have to be set at 1.0 V or less. In this case, the circuits in the receiving device require a drastic redesign since an intermediate potential Vcm has to be set at 1.0 V or lower with a supply voltage of 5 V. It is readily understood this causes cost increase and unstable operation problem.

### SUMMARY OF THE INVENTION

In one aspect of the invention, signal transmitting/receiving apparatus includes: a transmitting device for transmitting data; a receiving device for receiving the data; a data line for transmitting the data; and a supply line for transmitting a bias voltage for determining a voltage of the data line, wherein the transmitting device and the receiving device are connected to each other through the data line and the supply line, the transmitting device including: a driver circuit for outputting the data to the data line; and a bias generating means for generating the bias voltage and outputting the bias voltage to the supply line, the receiving device including: a terminating resistor connected to the data line; and a receiver circuit for detecting the data from the data line, wherein the data line is connected to the supply line via the terminating resistor.

In another embodiment of the invention, the bias generating means includes a bias generating circuit and a reference voltage generating circuit.

In still another embodiment of the invention, the data line includes a pair of differential lines.

In still another embodiment of the invention, the terminating resistor is connected so as to short circuit between the pair of differential lines, and the supply lines are connected at substantially a midpoint of the terminating resistor.

In still another embodiment of the invention, the transmitting device has a first ground potential; and the receiving device has a second ground potential, the second ground potential being higher than the first ground potential.

In still another embodiment of the invention, the transmitting device has a first supply potential; and the receiving device has a second supply potential, the second supply potential being higher than the first supply potential.

In still another embodiment of the invention, a signal transmitting/receiving apparatus further includes a ground interconnect line for connecting a ground of the transmitting device and a ground of the receiving device.

In still another embodiment of the invention, at least one of the data line and the supply line has flexibility.

In still another embodiment of the invention, the ground interconnect line has flexibility.

In one aspect of the invention, a transmitting device is connected to a data line which transmits data and a supply line which transmits a bias voltage for determining a voltage of the data line, the transmitting device transmitting the data to a receiving device wherein: the receiving device includes a terminating resistor connected to the data line and a receiver circuit for detecting the data from the data line; and the data line is connected to the supply line through the terminating resistor, the transmitting device including: a driver circuit for outputting the data to the data line; and bias generating means for generating the bias voltage and outputting the bias voltage to the supply line.

In one embodiment of the invention, the bias generating means includes a bias generating circuit and a reference voltage generating circuit.

In another embodiment of the invention, a transmitting device is further connected to a ground interconnect line for transmitting a ground potential of the transmitting device to the receiving device.

In one aspect the invention, a receiving device is connected to a data line which transmits data and a supply line which transmits a bias voltage for determining a voltage of the data line, the receiving device receiving the data from a transmitting device wherein: the transmitting device includes a driver circuit for outputting the data to the data line and bias generating means for generating the bias voltage and outputting the bias voltage to the supply line, the receiving device including: a terminating resistor connected to the data line; and a receiver circuit for detecting the data from the data line, the terminating resistor connecting the data line and the supply line.

In one embodiment of the invention, the bias generating means includes a bias generating circuit and a reference voltage generating circuit.

In another embodiment of the invention, the data line includes a pair of differential lines; the terminating resistor short circuits between the pair of differential lines; and the bias voltage is applied at substantially a midpoint of the terminating resistor.

In still another embodiment of the invention, a receiving device is further connected to a ground interconnect line which transmits a ground potential of the transmitting device.

In one aspect of the invention, a signal transmitting/receiving apparatus includes: a transmitting device for transmitting a first data and a second data; a receiving device for receiving the first data and the second data; a data line for transmitting the first data and the second data; wherein the transmitting device and the receiving device are connected to each other through the data line, the transmitting device including: a driver circuit for outputting the first data to the data line; and a circuit for outputting the second data to the data line, the receiving device including: a terminating resistor connected to the data line; a receiver circuit for detecting the first data from the data line; and a bias generating means for generating a bias voltage applied to the terminating resistor, the bias generating means setting the bias voltage based on the second data from the data line.

In one embodiment of the invention, the bias generating means includes a bias generating circuit and a reference voltage generating circuit.

In another embodiment of the invention, the data line for transmitting the first data and the data line for transmitting the second data are different.

In still another embodiment of the invention, the data line includes a pair of differential lines.

In still another embodiment of the invention, the data line for transmitting the first data includes a pair of differential lines.

In still another embodiment of the invention, the terminating resistor is connected so as to short circuit between the pair of differential lines, and the bias voltage is applied at substantially a midpoint of the terminating resistor.

In still another embodiment of the invention, the terminating resistor is connected so as to short circuit between the pair of differential lines, and the bias voltage is applied at substantially a midpoint of the terminating resistor.

In still another embodiment of the invention, a signal transmitting/receiving apparatus further includes a ground interconnect line for connecting a ground of the transmitting device and a ground of the receiving device.

In still another embodiment of the invention, the data line has flexibility.

In still another embodiment of the invention, the ground interconnect line has flexibility.

In one aspect of the invention, a transmitting device is connected to a data line which transmits the first data and the second data to a receiving device, wherein, the receiving device includes: a terminating resistor connected to the data line; a receiver circuit for detecting the first data from the data line; and a bias generating means for generating a bias voltage to be applied to the terminating resistor based on the second data from the data line, the transmitting device including: a driver circuit for outputting the first data to the data line; and a circuit for outputting the second data to the data line.

In one embodiment of the invention, the bias generating means includes a bias generating circuit and a reference voltage generating circuit.

In another embodiment of the invention, the data line for transmitting the first data and the data line for transmitting the second data are different.

In still another embodiment of the invention, a transmitting device is further connected to a ground interconnect line for transmitting a ground potential of the transmitting device to the receiving device.

In another embodiment of the invention, the data line includes a pair of differential lines, and the terminating resistor is connected so as to short circuit between the pair of differential lines, whereby the bias voltage is applied at substantially a midpoint of the terminating resistor.

In one aspect of the invention, a receiving device is connected to a data line which transmits first data and second data for receiving the first data and the second data from a transmitting device, the transmitting device including: a driver circuit for outputting the first data to the data line; and a circuit for outputting the second data to the data line, the receiving device including: a terminating resistor connected to the data line; a receiver circuit for detecting the data from the data line; and a bias generating means for generating a bias voltage and outputting the bias voltage to the terminating resistor, wherein the bias generating means sets the bias voltage based on the second data from the data line.

In one embodiment of the invention, the bias generating means includes a bias generating circuit and a reference voltage generating circuit.

In another embodiment of the invention, the data line for transmitting the first data and the data line for transmitting the second data are different.

In still another embodiment of the invention, the data line includes a pair of differential lines; the terminating resistor short circuits between the pair of differential lines; and the bias voltage is applied at substantially a midpoint of the terminating resistor.

In still another embodiment of the invention, a receiving device is further connected to a ground interconnect line which transmits a ground voltage of the transmitting device.

In one aspect of the invention, a signal transmitting/receiving apparatus includes: a transmitting device for transmitting data; a receiving device for receiving the data; and a data line for transmitting the data, wherein the transmitting device and the receiving device are connected to each other through the data line, the transmitting devics including a driver circuit for outputting the data to the data line, the receiving device including: a terminating resistor connected to the data line; a receiver circuit for detecting the data from the data line; and a bias generating means for generating a bias voltage to be applied to the terminating resistor, the bias generating means setting the bias voltage based on the potential of the data line.

In one embodiment of the invention, the bias generating means include, a bias generating circuit and a reference voltage generating circuit.

In another embodiment of the invention, the data line includes a pair of differential lines.

In still another embodiment of the invention, the terminating resistor is connected so as to short circuit between the pair of differential lines, whereby the bias voltage is applied to substantially a midpoint of the terminating resistor.

In still another embodiment of the invention, a signal transmitting/receiving apparatus further includes a ground interconnect line for connecting a ground of the transmitting device and a ground of the receiving device.

In still another embodiment of the invention, the data line has flexibility.

In still another embodiment of the invention, the ground interconnect line has flexibility.

In one aspect of the invention, a receiving device is connected to a data line which transmits data, so as to receive the data from a transmitting device, the transmitting device including a driver circuit for outputting the data to the data line, the receiving device including: a terminating resistor connected to the data line; a receiver circuit for detecting the data from the data line; and a bias generating means for generating the bias voltage and outputting the bias voltage to the terminating resistor, the bias generating means setting the bias voltage based on a potential of the data line.

In one embodiment of the invention, the bias generating means includes a bias generating circuit and a reference voltage generating circuit.

In another embodiment of the invention, the data line includes a pair of differential lines; the terminating resistor short circuits between the pair of differential lines; and the bias voltage is applied at substantially a midpoint of the terminating resistor.

In still another embodiment of the invention, a receiving device is further connected to a ground interconnect line which transmits a ground potential of the transmitting device.

In one aspect of the invention, a signal transmitting/receiving apparatus includes a transmitting device for transmitting a plurality of data; a receiving device for receiving the plurality of data; a plurality of data lines for transmitting the plurality of data; and at least one supply line for transmitting a bias voltage for determining a voltage of the plurality of data lines, wherein the transmitting device and the receiving device are connected to each other through the plurality of data lines and the at least one supply line, the transmitting device including: a plurality of driver circuits for outputting the plurality of data to the plurality of corresponding data lines, respectively; and at least one bias generating means for generating the bias voltage and outputting the bias voltage to the at least one supply line, the receiving device including: a plurality of terminating resistors connected to the plurality of corresponding data lines, respectively; and a plurality of receiver circuits for detecting the plurality of data from the plurality of data lines, respectively, the plurality of data lines are connected to the at least one of corresponding supply line through the plurality of terminating resistors.

In one embodiment of the invention, at least one of the plurality of terminating resistors and the at least one supply line are connected through an electric resistance.

In another embodiment of the invention, at least one of the plurality of terminating resistors and the at least one supply line are connected through an amplifier.

In one aspect of the invention, a signal transmitting/receiving apparatus includes a transmitting device for transmitting a plurality of first data and at least one second data; a receiving device for receiving the plurality of first data and the at least one second data; and a plurality of data lines for transmitting the plurality of first data and the at least one second data, wherein the transmitting device and the receiving device are connected to each other through the plurality of data lines, the transmitting device including: a plurality of driver circuits for outputting the plurality of first data to the plurality of corresponding data lines, respectively; and at least one circuit for transmitting the at least one second data to the plurality of data lines, the receiving device including: a plurality of terminating resistors connected to the plurality of corresponding data lines, respectively; and a plurality of receiver circuits for detecting the plurality of first data from the plurality of data lines, respectively, at least one bias generating means for generating a bias voltage to be applied to the plurality of terminating resistors, the at least one bias generating means setting the bias voltage based on the at least one second data from the plurality of data lines.

In one embodiment of the invention, at least one of the plurality of terminating resistors and the at least one bias generating means are connected through an electric resistance.

In another embodiment of the invention, at least one of the plurality of terminating resistors and the at least one bias generating means are connected through an amplifier.

In one aspect of the invention, a signal transmitting/receiving apparatus includes : a transmitting device for transmitting a plurality of data; a receiving device for receiving the plurality of data; and a plurality of data lines for transmitting the plurality of data, wherein the transmitting device and the receiving device are connected to each other through the plurality of data lines, the transmitting device including a plurality of driver circuits for outputting the plurality of data to the plurality of corresponding data lines, respectively, the receiving device including: a plurality of terminating resistors connected to the plurality of corresponding data lines, respectively; a plurality of receiver circuits for detecting the plurality of data from the plurality of data lines, respectively; and at least one bias generating means for generating a bias voltage to be applied to the plurality of terminating resistors, the at least one bias generating means sets the bias voltage based on at least one potential among those of the plurality of data lines.

In one embodiment of the invention, at least one of the plurality of terminating resistors and the at least one bias generating means are connected through an electric resistance.

In another embodiment of the invention, at least one of the plurality of terminating resistors and the at least one bias generation means are connected through an amplifier.

In one aspect of the invention, a method for signal transmitting/receiving uses: a transmitting device for transmitting data; a receiving device for receiving the data; a data line for transmitting the data; and a supply line for transmitting a bias voltage which determines a voltage of the data line, the method including the steps of: generating the bias voltage at the transmitting device for outputting the bias voltage to the supply line; outputting the data through a terminating resistor in the receiving device, to the data line connected to the supply line; and detecting the data from the data line at the receiving device.

Thus, the invention described herein makes possible the advantages of providing a signal transmitting/receiving apparatus which achieves a stable data transmission even in the case where the ground potential of the transmitting device and the ground potential of the receiving device in the signal transmitting/receiving device are different or in the case where the signal transmitting/receiving device is operated under a supply voltage in the receiving device higher than that in the transmitting device.

These and other advantages of the present invention will become apparent to those skilled in the art upon reading and understanding the following detailed description with reference to the accompanying figures.

### BRIEF DESCRIPTION OF THE DRAWINGS

Figure **1A** is a diagram showing a configuration of a signal transmitting/receiving apparatus according to a first embodiment of the present invention.
Figure **1B** is a diagram showing the ground potential difference between the transmitting device and the receiving device according to the first embodiment of the present invention.
Figure **2A** is a diagram showing a configuration of a signal transmitting/receiving apparatus according to a second embodiment of the present invention.
Figure **2B** is a diagram showing the ground potential difference between the transmitting device and the receiving device according to the second embodiment of the present invention.
Figure **3A** is a diagram showing a configuration of a signal transmitting/receiving apparatus according to a third embodiment of the present invention.
Figure **3B** is a diagram showing the ground potential difference between the transmitting device and the receiving device according to the third embodiment of the present invention.
Figure **4** is a diagram showing a configuration of a reference voltage generating circuit according to the third embodiment of the present invention.
Figure **5A** is a diagram showing a configuration of a signal transmitting/receiving apparatus according to a fourth embodiment of the present invention.
Figure **5B** is a diagram showing the ground potential difference between the transmitting device and the receiving device according to the fourth embodiment of the present invention.
Figure **6** is a schematic diagram of a configuration of a digital video disc incorporating the present invention.
Figure **7** is a diagram showing a configuration of a signal transmitting/receiving apparatus according to a fifth embodiment of the present invention.
Figure **8A** is a diagram showing a configuration of a signal transmitting/receiving apparatus according to a fifth embodiment of the present invention.
Figure **8B** is a diagram showing a configuration of a signal transmitting/receiving apparatus according to a fifth embodiment of the present invention.
Figure **9A** is a diagram showing a configuration of a conventional signal transmitting/receiving apparatus.
Figure **9B** is a diagram showing the ground potential difference between the transmitting device and the receiving device in a conventional signal transmitting/receiving apparatus.
Figure **10A** is a diagram showing a configuration of a conventional signal transmitting/receiving apparatus.
Figure **10B** is a diagram showing the ground potential difference between the transmitting device and the receiving device in a conventional signal transmitting/receiving apparatus.
Figure **11** is a diagram showing a configuration diagram of a driver circuit in the transmitting device according to a conventional signal transmitting/receiving apparatus.
Figure **12** is a diagram showing the relationship between the degree of integration of CMOS devices or bipolar devices and a supply voltage.

### DESCRIPTION OF THE PREFERRED EMBODIMENTS

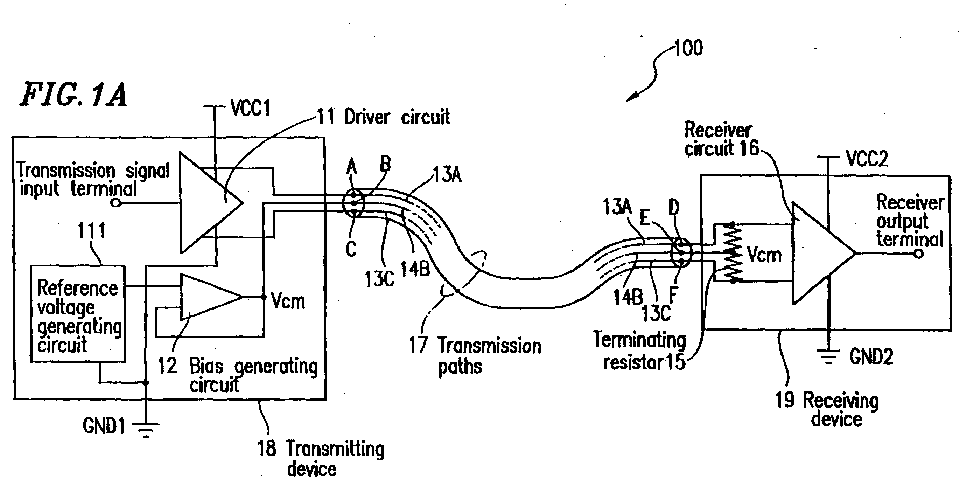

A first embodiment and a second embodiment of a signal transmitting/receiving apparatus according to the present invention will be explained first in reference to Figures **1A** through **2B**.

The fundamental features of the first and second embodiments of a transmitting/receiving apparatus according to the present invention are summarized in paragraphs 1) and 2) below. Otherwise the first and second embodiments of the transmitting/receiving apparatus according to the present invention basically have the same structure as the conventional apparatuses.
1) Transmission paths in accordance with a transmitting/receiving apparatus of the first and second embodiments of the present invention include a data line and a supply line for transmitting a bias voltage for the data line. In the case where a pair of differential lines are used for the data line, there are at least three transmission paths connecting a transmitting device and a receiving device. If a single line is used for the data line, there are at least two transmission paths connecting the transmitting device and the receiving device. A control line may be used in conjunction with the transmission paths (a pair of differential lines or a single line) as necessary.
2) The transmitting device includes a bias generating circuit **2**, which applies a bias voltage to the receiving terminal. The bias voltage is transmitted via the supply line running parallel to the data line.

### (Embodiment 1)

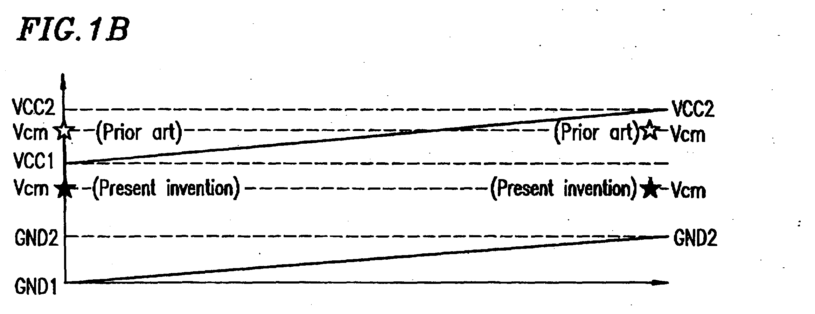

Figures **1A** and **1B** illustrate the first example of a signal transmitting/receiving apparatus according to the present invention. Figure **1A** shows a configuration of a signal transmitting/receiving apparatus for solving the problems associated with a difference in ground potentials between the transmitting device and the receiving device in a signal transmitting/receiving apparatus.

A signal transmitting/receiving apparatus **100** of Figure **1A** is configured so that a transmitting device **18** and a receiving device **19** are connected through transmission paths **17**. The transmission paths **17** include a pair of differential lines **13A** and **13C**, which are data lines for transmitting data, and a supply line (a bias voltage transmission path) **14B** for transmitting a bias voltage which determines the voltage of the pair of differential lines **13A** and **13C**. The pair of differential lines **13A** and **13C** and the supply line **14B** are connected to the transmitting device **18** and the receiving device **19** through. e.g., connecting terminals **A** through **F**. The transmitting device **18** includes a driver circuit **11** for transmitting data and a bias generating circuit **12** for generating a bias voltage and for transmitting the bias voltage to the receiving device **19**. The receiving device **19** includes a terminating resistor **15** for terminating the pair of differential lines **13A** and **13C** and a receiver circuit **16** for detecting data transmitted from the transmitting device **18**. In the receiving device **19**, the pair of differential lines **13A** and **13C** are connected to the supply line **14B** through the terminating resistor **15**.

The function/effects according to the configuration of the present embodiment will be now explained in reference to the conventional problems.

Figure **1A** illustrates the case where the ground potential GND1 of the transmitting device **18** and the ground potential GND2 of the receiving device **19** are different. Specifically, this represents the case where the ground potential GND2 of the receiving device **19** is higher than the ground potential GND1 of the transmitting device **18**. Even in such a case, a current can flow in the signal transmitting/receiving apparatus **100** according to the present invention because the intermediate voltage Vcm of the pair of differential lines **13A** and **13C** is lower than the supply voltage VCC1 of the driver circuit **11**.

The difference between the present invention and a conventional apparatus will be readily understood by comparing Figures **1B** and **9B**. As shown in Figure **9B**, the intermediate potential Vcm generated in the bias generating circuit **102** (Figure **9A**) in the receiving device **130** appears higher (e.g., 0.5 V to 1.0 V) than the ground potential GND1 of the transmitting device **120.** If the intermediate potential Vcm generated in the bias generating circuit **12** is sent to the receiving device **19** through the supply line **14B** running along the pair of differential lines **13A** and **13C**, the midpoint potential of the pair of differential lines **13A** and **13C** is determined via the terminating resistor **15**, so as to be equal to Vcm at the transmitting device **18**. The reason for this is as follows: when the current flowing through the pair of differential lines **13A** and **13C** (which is returned by the terminating resistor **15** as it reaches the receiving device **19**) is equal, the supply line **14B** connected at the midpoint of the terminating resistor **15** only supplies a bias voltage from a DC perspective, and no current flows. Therefore, the influence of the resistance drop on the transmission path **17** can be ignored

It is also possible, within the scope of the examples of the present invention to set the intermediate potential Vcm slightly higher so as to address a slight current which flows due to the imbalance of the capacitance and the resistance of the differential lines **17** or the imbalance of the differential driver circuit **11**, thereby setting the midpoint potential of the pair of differential lines **13A** and **13C** of the transmitting device **18** at a desirable optimum level.

Accordingly, if the intermediate potential Vcm is set at 2.0 V in the transmitting device **18**, the midpoint potential of the pair of differential lines **13A** and **13C** at the transmitting device **18** will be 2.0 V, which is almost the same as the intermediate potential Vcm. Therefore, unlike in the conventional apparatuses, Vcm does not exceed the supply voltage VCC1=2.5 V, thereby making it possible to apply a stable current to the output terminals **A** and **C**.

As described above, according to the present embodiment, signal transmissions/receptions can be carried out efficiently, even in the case where the transmitting device **18** is a floor model VCR whose power is supplied from an outlet and the corresponding receiving device **19** is a video camera operating by a battery (in which the power is supplied from the internal battery, and the ground of the video camera is only connected to the housing of the video camera, and thus the ground of the camera will be a ground potential GND2, which may inevitably be different from the ground potential of the outlet), or in the case where the power is supplied from the above floor model VCR to the above video camera through a cable (which is particularly represented by IEEE 1394 and the like), where the ground potential GND2 of the video camera may range about 0.5 V to 1.0 V higher ($\text{GND2=GND1+0.5 V to 1.0 V}$) than the ground potential GND1 of the floor model VCR.

### (Embodiment 2)

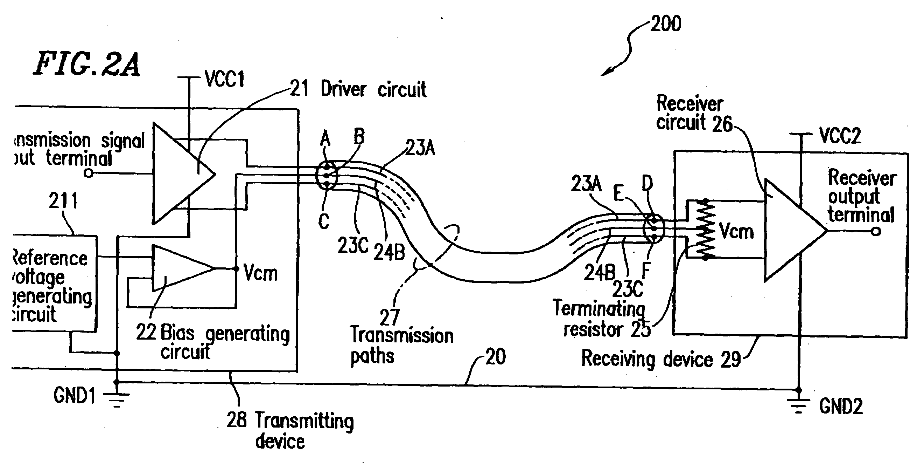

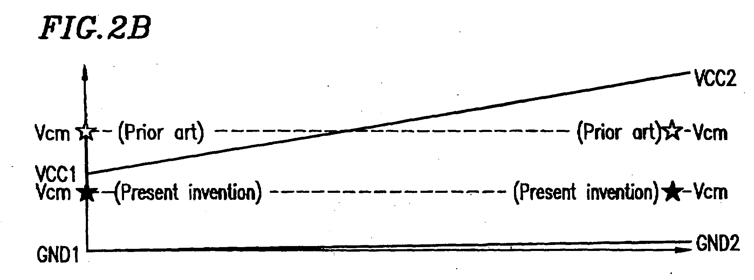

Figures **2A** and **2B** illustrate the second embodiment of a signal transmitting/receiving apparatus according to the present invention. This is the case where the supply voltage VCC1 of a transmitting device **28** and the supply voltage VCC2 of a receiving device **29** are different. Specifically, this represents the case where the supply voltage VCC2 of the receiving device **29** is higher than the supply voltage VCC1 of the transmitting device **28**. Even in such a case, a current can flow in a signal transmitting/receiving apparatus **200** according to the present invention because the intermediate voltage Vcm of the pair of differential lines **23A** and **23C** is lower than the supply voltage VCC1 of a driver circuit **21**.

The difference between the present invention and a conventional apparatus is apparent by comparing Figure **2B** and Figure **10B**. In a conventional apparatus, if a receiving device **230** is designed, supposing the intermediate potential Vcm is 1/2 of the supply voltage, Vcm will be, e.g., 2.5 V = (5 V x 1/2). Therefore, those skilled in the art will readily understand that the supply voltage VCC1 of the transmitting device **220** should be set lower than 2.5 V if the design rule is 0.25µm or less to achieve a high integration.

On the other hand, according to the present embodiment shown in Figure **2A**, a midpoint potential of a pair of differential lines **23A** and **23C** at the transmitting device **28** is determined based only on the transmitting device **28**, as described in Figure **1A**. Therefore, according to the present embodiment, it is possible to apply a stable current from the driver circuit **21** to GDN 2 of the receiving device **29**, thereby making it possible to transmit/receive the data efficiently.

In the first and second embodiments of the present invention, a ground interconnect line **20** can be provided so as to connect a ground GND1 of the transmitting device arid a ground GND2 of the receiving device, as shown in Figure **2A**. If the ground interconnect line **20** is provided, the potential difference between GND1 of the transmitting device **28** to the receiving device **29** becomes smaller, thereby supplying a more stable current from the transmitting device **28** and GND2 of the receiving device **29.**

### (Embodiment 3)

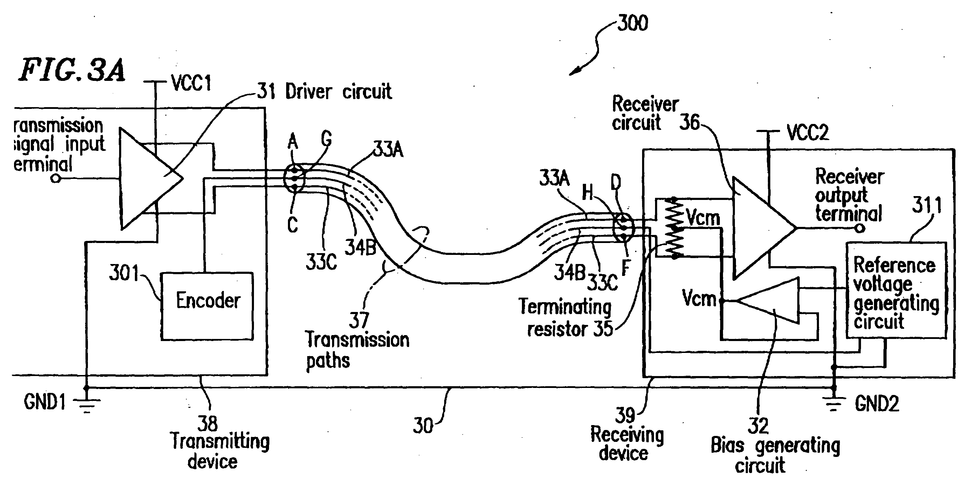

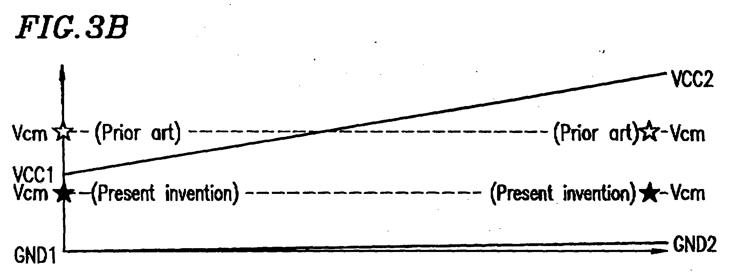

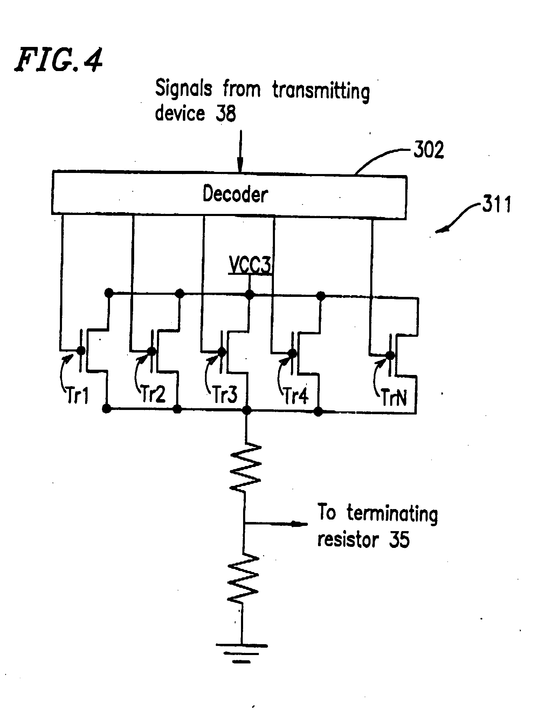

Figures **3A**, **3B** and **4** show the third embodiment of a signal transmitting/receiving apparatus according to the present invention. In the third embodiment, a receiving device **39** is configured so as to include a reference voltage generating circuit 311 for generating a bias voltage, which is set by signals transmitted from a transmitting device **38**. The remaining configuration is basically the same as in the first and second embodiments.

In the third embodiment of the present invention, when the power to a signal transmitting/receiving apparatus **300** is turned on, a signal for setting the bias voltage is transmitted from the transmitting device **38** to the reference voltage generating circuit **311** in the receiving device **39**, thereby setting an appropriate bias voltage used for transmitting data from the transmitting device **38** to the receiving device **39**. The appropriate bias voltage, thus set, makes it possible to stably transmit data from the transmitting device **38** to the receiving device **39**.

The method in which the transmitting device **38** transmits the signal for setting the bias voltage and the method in which the reference voltage generating circuit **311** sets the bias voltage based on the signal, may be any such methods as known to those skilled in the art. For example, the signal transmissions/receptions may be carried out between an encoder **301** provided in the transmitting device **38** and a decoder **302** provided in the reference voltage generating circuit **311** (Figure **4**). As the method in which the reference voltage generating circuit **311** sets the bias voltage, a reference voltage generating circuit **311** as shown in Figure **4** may be used.

The reference voltage generating circuit **311** shown in Figure **4** includes a plurality of transistors Tr1, Tr2...TrN between the power supply VCC3 of the reference voltage generating circuit **311** and a terminating resistor **35** of the receiving device **39**. Each gate electrode of the transistors Tr1, Tr2...TrN is connected to the decoder **302**.

When the signal transmitted from the transmitting device **38** is input to the decoder **302** in the reference voltage generating circuit **311**, the decoder **302** determines, based on the signal, which transistors among Tr1, Tr2...TrN are to be in the ON state and which are to be in the OFF state. By setting the ON/OFF combination of each of the transistors Tr1, Tr2...TrN in various patterns, the bias voltage can be set at an appropriate value. The resultant appropriate bias voltage makes it possible to stably transmit data from the transmitting device **38** to the receiving device **39**.

Alternatively, a signal line **34B** as shown in Figure **3A** or the pair of differential lines **33A** and **33C** may be used for transmitting the signal for setting the bias voltage from the transmitting device **38** to the receiving device **39**. In the case where the pair of differential lines **33A** and **33C** are used, the total number of the transmission paths **37** connecting the transmitting device **38** and the receiving device **39** are reduced.

### (Embodiment 4)

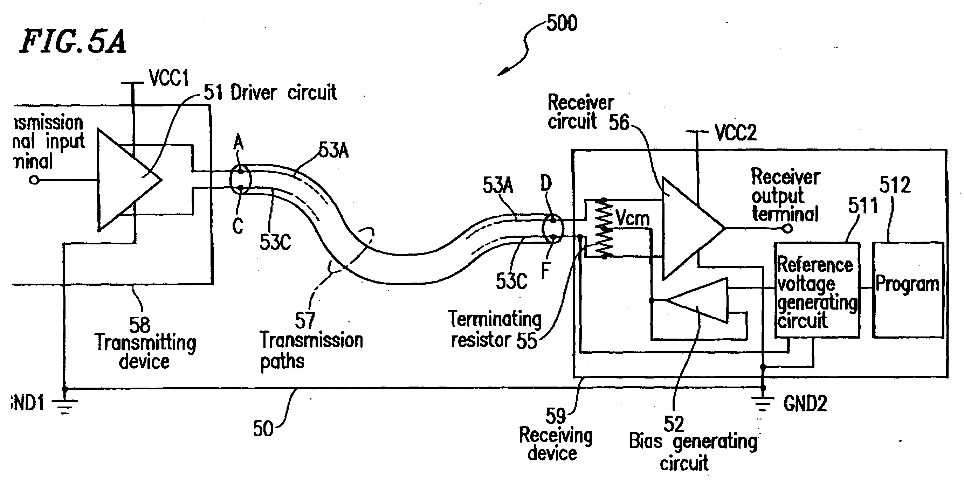

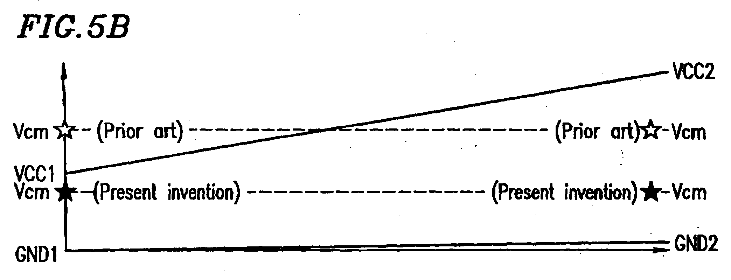

Figures **5A** and **5B** show the fourth embodiment of a signal transmitting/receiving apparatus according to the present invention. A signal transmitting/receiving apparatus **500** of the fourth embodiment according to the present invention is configured so that a receiving device **59** includes a reference voltage generating circuit **511** for detecting a potential of a pair of differential lines **53A** and **53C**, thereby setting the bias voltage based on a predetermined program **512**. Since the bias voltage is set by the receiving device **59**, a supply line and a signal line are not provided between a transmitting device **58** and the receiving device **59**.

The method in which the reference voltage generating circuit **511** detects the potential of the pair of differential lines **53A** and **53C** and the method for setting the bias voltage may be any method known to those skilled in the art. The remaining configuration is basically the same as in the first and second embodiments of the signal transmitting/receiving apparatus according to the present invention.

In the fourth embodiment of the present invention, it is preferable to first set a certain bias voltage in the reference voltage generating circuit **511**, in order to detect the potential of the pair of differential lines **53A** and **53C**. The potential of the data transmitted from the transmitting device **58** is then detected so as to set an appropriate bias voltage based on the program **512**. The resultant appropriate bias voltage makes it possible to stably transmit the data from the transmitting device **58** to the receiving device **59**.

In the third embodiment and fourth embodiment of the present invention, ground interconnect lines **30** and **50** can be respectively provided so as to connect the ground GND1 of the transmitting device and the ground GND2 of the receiving device, as shown in Figures **3A** and **5A**. If the ground interconnect lines **30** and **50** are respectively provided, the potential difference between GND1 of the transmitting device and GND2 of the receiving device becomes smaller as shown in Figures **3B** and **5B**, thereby supplying a more stable current from the transmitting device to the receiving device.

As described in the DESCRIPTION OF THE RELATED ART, the above difference in the supply voltages (VCC2 - VCC1) is derived from an inevitable requirement of the system (in the embodiment of signal transmitting/receiving apparatuses incorporated in digital video disc apparatuses and the like) as described below. This means the present embodiment of the invention can salve a very significant problem.

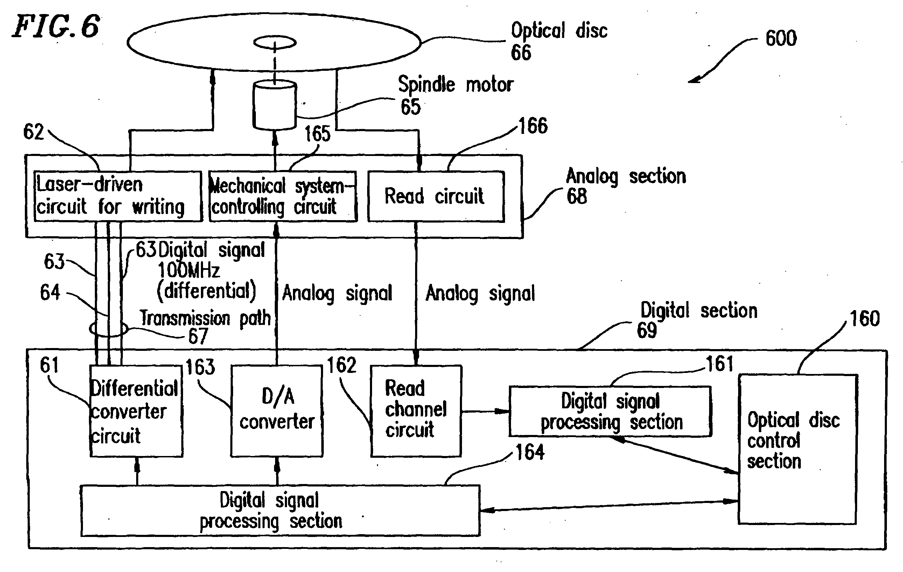

Figure **6** is a schematic diagram showing a configuration of a digital video disc apparatus **600** incorporating the signal transmitting/receiving apparatus of the present invention. The digital video disc apparatus **600** incorporates the signal transmitting/receiving apparatus of the present invention for the data transmission between a differential converter circuit **61** in a digital section **69** and a laser-driven circuit for writing **62** in an analog section **68**. The RPM of an optical disc **66** are controlled by a mechanical system-controlling circuit **165** so as to be driven by a spindle motor **65** at a predetermined revolution. A read circuit **166** irradiates lamer light onto the tracks of the optical disc **66**, whereby data stored in the track is read. The output of the read circuit **166** is input to a read channel circuit **162** as an analog signal. The data written in the optical disc **66** is transmitted from the differential converter circuit **61** to the laser-driven circuit for writing **62** through transmission paths **67**, and then written in the optical disc **66** by using a laser for writing (not shown).

As shown in Figure **6**, in the case where the transmitting device is a signal processing large-scale integration circuit (LSI) (the digital sections) **69** and the receiving device is a servomotor controlling IC (the analog sections) **68**, there is a trend towards developing highly integrated single-chip transmitting devices with a view to reducing the cost and saving the mounting area required of the apparatus by utilizing the leading-edge CMOS device technologies. Therefore, as shown in Figure **12**, the supply voltage of CMOS devices has been reduced, generation by generation,from 5.0 V to 3.0 V, 3.0 V to 2.5 V, and 2.5 V to 1.8 V.

On the other hand, in the case of the IC **68** which controls the servomotor of the receiving device, the supply voltage has not been changed with successive generations, being constant at 5.0 V. This is because the IC **68** is a bipolar device, which is an analog circuit formed of semiconductors driving mechanical systems such as a servomotor. Moreover, since the IC **68** is seldom required to incorporate added a new function in each product generation, its design is unchanged for five years or so, once designed. Thus, it is not very practical to change the circuits in the receiving device. Therefore, the unavoidable problem arises when the supply voltage VCC2 of the receiving device is higher than the supply voltage VCC1 of the transmitting device in a signal transmitting/receiving apparatus used in a high-speed servomotor-controlled IC which is necessary in a optical disc driving apparatus and the like (as represented by a digital video disc apparatus, etc.). The present invention provides a low-cost, high-performance signal transmitting/receiving apparatus, which solves such a problem.

### (Embodiment 5)

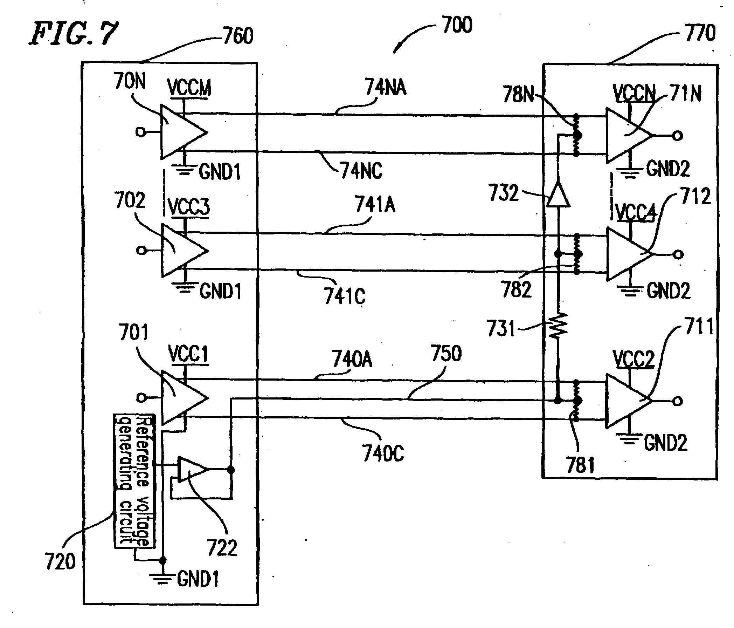

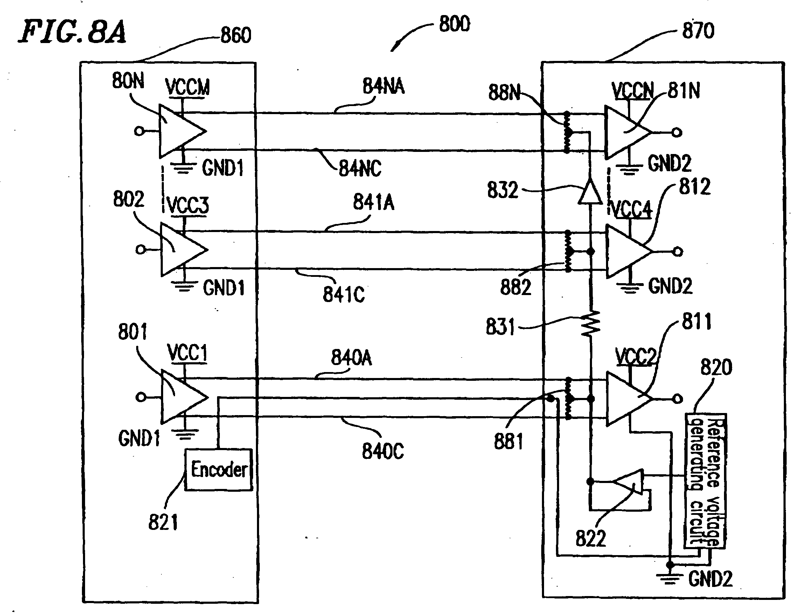

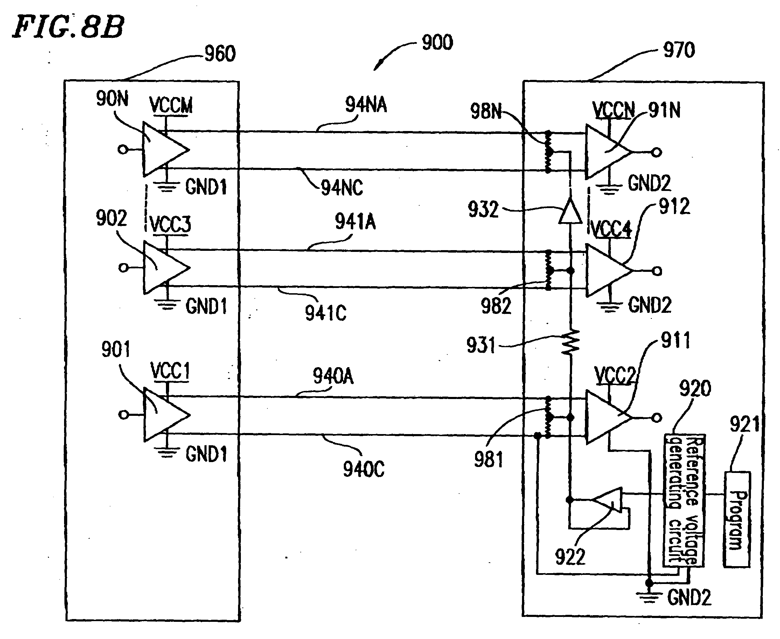

Figures **7, 8A** and **8B** show the fifth embodiment of a signal transmitting/receiving apparatuses **700**, **800** and **900** according to the present invention. In data transmission between a transmitting device and a receiving device, a plurality of pairs of differential lines may be provided in order to transmit a different type of data (as in the embodiment of the digital video disc apparatus **600** shown in Figure **6**). In such a case, it may be required to set a different bias voltage for each pair of differential lines. When a plurality of reference voltage generating circuits corresponding to the plurality of pairs of differential lines, in order to set each bias voltage of the plurality of the differential lines, a problem arises because the entire configuration size of the signal transmitting/receiving apparatus increases, and the cost of the apparatus also increases. Therefore, as shown in Figure **7**, each bias voltage of the plurality of pairs of differential lines **740A, 740C, 741A, 741C...74NA** and **74NC** may be commonly set by a single reference voltage generating circuit **720** and a single bias generating circuit **722** provided in a transmitting device **760** and a single supply line **750** via the terminating resistors **781, 782,...78N**. If the appropriate bias voltage for each pair of differential lines varies, the differences can be adjusted by providing the corresponding numbers of a resistor **731** and an amplifier **732** between the supply line **750** and each terminating resistor **781** to **78N**.

Similarly in the case of the third embodiment of the present invention where the reference voltage generating circuit sets the bias voltage based on the signal from the transmitting device, a single reference voltage generating circuit **820** and a single bias generating circuit **822** may be provided in a receiving device **870** as shown in Figure **8A**, thereby commonly setting the respective bias voltage of a plurality of differential lines **840A, 840C, 841A**, **841C...84NA** and **84NC** via terminating resistors **881**, **882...88N**.

Furthermore, as shown in Figure **8B**, it may be configured so that a reference voltage generating circuit **920** (as shown in the fourth embodiment of the present invention) sets a bias voltage based on a program **921**, wherein the respective bias voltage of the plurality of pairs of differential lines **940A, 940C, 941A, 941C...94NA** and **94NC** maybe commonly set via terminating resistors **981,982...98N** using a single reference voltage generating circuit **920** and a single bias generating circuit **922**.

Also in the embodiment illustrated in Figures **8A** and **8B**, if there is a difference between the appropriate bias voltage for each pair of differential lines, a corresponding number of resistors **831** and **931** and amplifiers **832** and **932** may be provided.

Furthermore in the present embodiment, a ground interconnect line may be provided, as necessary, for connecting GND1 of the transmitting device and GND2 of the receiving device.

It should be noted that the signal transmitting/receiving apparatuses **700, 800** or **900** shown in Figures **7A, 8A** or **8B** include only one reference voltage generating circuit **720, 820** or **920,** the number of the reference voltage generating circuit is not limited thereto. Two or more reference voltage generating circuits may be included in order to set each bias voltage at an appropriate value. Also, any number of the driver circuits **701** to **70N**, **801** to **80N**, **901** to **90N** in transmitting devices **760**, **860** and **960** and any number of the receiver circuits **711** to **71N**, **811** to **81N, 911** to **91N** in receiving devices **770**, **870** and **970** may be met in accordance with each embodiment of the signal transmitting/receiving apparatus.

As described above, by commonly setting the respective bias voltage for a plurality of differential lines, the configuration of the entire signal transmitting/receiving apparatus becomes simple, and therefore the cost of the apparatus is maintained low.

While cables are illustrated for transmission paths in the embodiments of the signal transmitting/receiving apparatus according to the present invention, any line, can also be used (e.g., transmission paths may be provided on the substrate). In this case, the substrate including the lines is preferably flexible as the cables.

The present invention makes it possible to transmit data stably even in the case where the signal transmitting/receiving device is operated under a supply voltage of the receiving device higher than the supply voltage of the transmitting device, or in the case where the ground potential of the transmitting device and the ground potential of the receiving device in the signal transmitting/receiving device are different, whereby a low-cost, high-performance signal transmitting/receiving apparatus is provided.

Various other modifications will be apparent to and can be readily made by those skilled in the art without departing from the scope and spirit of this invention. Accordingly, it is net intended that the scope of the claims appended hereto be limited to the description as set forth herein, but rather that the claims be broadly construed.

## Claims

1. A signal transmitting/receiving apparatus, comprising:
a transmitting device for transmitting data;
a receiving device for receiving the data;
a data line for transmitting the data; and
a supply line for transmitting a bias voltage for determining a voltage of the data line,
wherein the transmitting device and the receiving device are connected to each other through the data line and the supply line,
the transmitting device comprising:
a driver circuit for outputting the data to the data line; and
a bias generating means for generating the bias voltage and outputting the bias voltage to the supply line,
the receiving device comprising:
a terminating resistor connected to the data line; and
a receiver circuit for detecting the data from the data line,
wherein the data line is connected to the supply line via the terminating resistor.

2. A signal transmitting/receiving apparatus according to claim 1, wherein the bias generating means comprises a bias generating circuit and a reference voltage generating circuit.

3. A signal transmitting/receiving apparatus according to claim 1, wherein the data line comprises a pair of differential lines.

4. A signal transmitting/receiving apparatus according to claim 3, wherein the terminating resistor is connected so as to short circuit between the pair of differential lines, and the supply lines are connected at substantially a midpoint of the terminating resistor.

5. A signal transmitting/receiving apparatus according to claim 1, wherein:
the transmitting device has a first ground potential; and
the receiving device has a second ground potential,
the second ground potential being higher than the first ground potential.

6. A signal transmitting/receiving apparatus according to claim 1, wherein:
the transmitting device has a first supply potential; and
the receiving device has a second supply potential,
the second supply potential being higher than the first supply potential.

7. A signal transmitting/receiving apparatus according to claim 1, further comprising a ground interconnect line for connecting a ground of the transmitting device and a ground of the receiving device.

8. A signal transmitting/receiving apparatus according to claim 1, wherein at least one of the data line and the supply line has flexibility.

9. A signal transmitting/receiving apparatus according to claim 7, wherein the ground interconnect line has flexibility.

10. A transmitting device connected to a data line which transmits data and a supply line which transmits a bias voltage for determining a voltage of the data line, the transmitting device transmitting the data to a receiving device wherein:
the receiving device comprises a terminating resistor connected to the data line and a receiver circuit for detecting the data from the data line; and
the data line is connected to the supply line through the terminating resistor,
the transmitting device comprising:
a driver circuit for outputting the data to the data line; and
bias generating means for generating the bias voltage and outputting the bias voltage to the supply line.

11. A transmitting device according to claim 10, wherein the bias generating means comprises a bias generating circuit end a reference voltage generating circuit.

12. A transmitting device according to claim 10, further connected to a ground interconnect line for transmitting a ground potential of the transmitting device to the receiving device.

13. A receiving device connected to a data line which transmits data and a supply line which transmits a bias voltage for determining a voltage of the data line, the receiving device receiving the data from a transmitting device wherein:
the transmitting device comprises a driver circuit for outputting the data to the data line and bias generating moans for generating the bias voltage and outputting the bias voltage to the supply line,
the receiving device comprising:
a terminating resistor connected to the data line; and
a receiver circuit for detecting the data from the data line,
the terminating resistor connecting the data line and the supply line.

14. A receiving device according to claim 13, wherein the bias generating means comprises a bias generating circuit and a reference voltage generating circuit.

15. A receiving device according to claim 13, wherein:
the data line comprises a pair of differential lines;
the terminating resistor short circuits between the pair of differential lines; and
the bias voltage is applied at substantially a midpoint of the terminating resistor.

16. A receiving device according to claim 13, further connected to a ground interconnect line which transmits a ground potential of the transmitting device.

17. A signal transmitting/receiving apparatus, comprising:
a transmitting device for transmitting a first data and a second data;
a receiving device for receiving the first data and the second data;
a data line for transmitting the first data and the second data;
wherein the transmitting device and the receiving device are connected to each other through the data line,
the transmitting device comprising:
a driver circuit for outputting the first data to the data line; and
a circuit for outputting the second data to the data line,
the receiving device comprising:
a terminating resistor connected to the data line;
a receiver circuit for detecting the first data from the data line; and
a bias generating means for generating a bias voltage applied to the terminating resistor,
the bias generating means setting the bias voltage based on the second data from the data line.

18. A signal transmitting/receiving apparatus according to claim 17, wherein the bias generating means comprises a bias generating circuit and a reference voltage generating circuit.

19. A signal transmitting/receiving apparatus according to claim 17, wherein the data line for transmitting the first data and the data line for transmitting the second data are different.

20. A signal transmitting/receiving apparatus according to claim 17, wherein the data line comprises a pair of differential lines.

21. A signal transmitting/receiving apparatus according to claim 19, wherein the data line for transmitting the first data comprises a pair of differential lines.

22. A signal transmitting/receiving apparatus according to claim 20, wherein the terminating resistor is connected so as to short circuit between the pair of differential lines, and the bias voltage is applied at substantially a midpoint of the terminating resistor.

23. A signal transmitting/receiving apparatus according to claim 21, wherein the terminating resistor is connected so as to short circuit between the pair of differential lines, and the bias voltage is applied at substantially a midpoint of the terminating resistor.

24. A signal transmitting/receiving apparatus according to claim 17, further comprising a ground interconnect line for connecting a ground of the transmitting device and a ground of the receiving device.

25. A signal transmitting/receiving apparatus according to claim 17, wherein the data line has flexibility.

26. A signal transmitting/receiving apparatus according to claim 24, wherein the ground interconnect line has flexibility.

27. A transmitting device connected to a data line which transmits the first data and the second data to a receiving device, wherein,
the receiving device comprises: a terminating resistor connected to the data line; a receiver circuit for detecting the first data from the data line; and a bias generating means for generating a bias voltage to be applied to the terminating resistor based on the second data from the data line,
the transmitting device comprising:
a driver circuit for outputting the first data to the data line: and
a circuit for outputting the second data to the data line.

28. A transmitting device according to claim 27, wherein the bias generating means comprises a bias generating circuit and a reference voltage generating circuit.

29. A transmitting device according to claim 27, wherein the data line for transmitting the first data and the data line for transmitting the second data are different.

30. A transmitting device according to claim 27, further connected to a ground interconnect line for transmitting a ground potential of the transmitting device to the receiving device.

31. A transmitting device according to claim 27, wherein the data line comprises a pair of differential lines, and the terminating resistor is connected so as to short circuit between the pair of differential lines, whereby the bias voltage is applied at substantially a midpoint of the terminating resistor.

32. A receiving device connected to a data line which transmits first data and second data for receiving the first data and the second data from a transmitting device,
the transmitting device comprising:
a driver circuit for outputting the first data to the data line; and
a circuit for outputting the second data to the data line,
the receiving device comprising:
a terminating resistor connected to the data line;
a receiver circuit for detecting the data from the data line; and
a bias generating means for generating a bias voltage and outputting the bias voltage to the terminating resistor,
wherein the bias generating means sets the bias voltage based on the second data from the data line.

33. A receiving device according to claim 32, wherein the bias generating means comprises a bias generating circuit and a reference voltage generating circuit.

34. A receiving device according to claim 32, wherein the data line for transmitting the first data and the data line for transmitting the second data are different.

35. A receiving device according to claim 32, wherein: the data line comprises a pair of differential lines; the terminating resistor short circuits between the pair of differential lines; and
the bias voltage is applied at substantially a midpoint of the terminating resistor.

36. A receiving device according to claim 32, further connected to a ground interconnect line which transmits a ground potential of the transmitting device.

37. A signal transmitting/receiving apparatus, comprising:
a transmitting device for transmitting data;
a receiving device for receiving the data; and
a data line for transmitting the data,
wherein the transmitting device and the receiving device are connected to each other through the data line,
the transmitting device comprising a driver circuit for outputting the data to the data line,
the receiving device comprising:
a terminating resistor connected to the data line;
a receiver circuit for detecting the data from the data line; and
a bias generating means for generating a bias voltage to be applied to the terminating resistor,
the bias generating means setting the bias voltage based on the potential of the data line.

38. A signal transmitting/receiving apparatus according to claim 37, wherein the bias generating means comprises a bias generating circuit and a reference voltage generating circuit.

39. A signal transmitting/receiving apparatus according to claim 37, wherein the data line comprises a pair of differential lines.

40. A signal transmitting/receiving apparatus according to claim 39, wherein the terminating resistor is connected so as to short circuit between the pair of differential lines, whereby the bias voltage is applied to substantially a midpoint of the terminating resistor.

41. A signal transmitting/receiving apparatus according to claim 37, further comprising a ground interconnect line for connecting a ground of the transmitting device and a ground of the receiving device.

42. A signal transmitting/receiving apparatus according to claim 37, wherein the data line has flexibility.

43. A signal transmitting/receiving apparatus according to claim 41, wherein the ground interconnect line has flexibility.

44. A receiving device connected to a data line which transmits data, so as to receive the data from a transmitting device,
the transmitting device comprising a driver circuit for outputting the data to the data line,
the receiving device comprising:
a terminating resistor connected to the data line:
a receiver circuit for detecting the data from the data line; and
a bias generating means for generating the bias voltage and outputting the bias voltage to the terminating resistor,
the bias generating means setting the bias voltage based on a potential of the data line.

45. A receiving device according to claim 44, wherein the bias generating means comprises a bias generating circuit and a reference voltage generating circuit.

46. A receiving device according to claim 44, wherein:
the data line comprises a pair of differential lines;
the terminating resistor short circuits between the pair of differential lines: and
the bias voltage is applied at substantially a midpoint of the terminating resistor.

47. A receiving device according to claim 44, further connected to a ground interconnect line which transmits a ground potential of the transmitting device.

48. A signal transmitting/receiving apparatus, comprising:
a transmitting device for transmitting a plurality of data;
a receiving device for receiving the plurality of data;
a plurality of data lines for transmitting the plurality of data; and
at least one supply line for transmitting a bias voltage for determining a voltage of the plurality of data lines,
wherein the transmitting device and the receiving device are connected to each other through the plurality of data lines and the at least one supply line,
the transmitting device comprising:
a plurality of driver circuits for outputting the plurality of data to the the plurality of corresponding data lines, respectively; and
at least one bias generating means for generating the bias voltage and outputting the bias voltage to the at least one supply line,
the receiving device comprising:
a plurality of terminating resistors connected to the plurality of corresponding data lines, respectively; and
a plurality of receiver circuits for detecting the plurality of data from the plurality of data lines, respectively,
the plurality of data lines are connected to the at least one of corresponding supply line through the plurality of terminating resistors.

49. A signal transmitting/receiving apparatus according to claim 48, wherein at least one of the plurality of terminating resistors and the at learnt one supply line are connected through an electric resistance.

50. A signal transmitting/receiving apparatus according to claim 48, wherein at least one of the plurality of terminating resistors and the at learnt one supply line are connected through an amplifier.

51. A signal transmitting/receiving apparatus, comprising:
a transmitting device for transmitting a plurality of first data and at least one second data;
a receiving device for receiving the plurality of first data and the at least one second data; and
a plurality of data lines for transmitting the plurality of first data and the at least one second data,
wherein the transmitting device and the receiving device are connected to each other through the plurality of data lines,
the transmitting device comprising:
a plurality of driver circuits for outputting the plurality of first data to the plurality of corresponding data lines, respectively; and
at least one circuit for outputting the at least one second data to the plurality of data lines,
the receiving device comprising:
a plurality of terminating resistors connected to the plurality of corresponding data lines, respectively; and
a plurality of receiver circuits for detecting the plurality of first data from the plurality of data lines, respectively,
at least one bias generating means for generating a bias voltage to be applied to the plurality of terminating resistors ,
the at least one bias generating means setting the bias voltage based on the at least one second data from the plurality of data lines.

52. A signal transmitting/receiving apparatus according to claim 51, wherein at least one of the plurality of terminating resistors and the at least one bias generating means are connected through a electric resistance.

53. A signal transmitting/receiving apparatus according to claim 51, wherein at least one of the plurality of terminating resistors and the at least one bias generating means are connected through an amplifier.

54. A signal transmitting/receiving apparatus, comprising:
a transmitting device for transmitting a plurality of data;
a receiving device for receiving the plurality of data; and
a plurality of data lines for transmitting the plurality of data,
wherein the transmitting device and the receiving device are connected to each other through the plurality of data lines,
the transmitting device comprising a plurality of driver circuits for outputting the plurality of data to the plurality of corresponding data lines, respectively,
the receiving device comprising:
a plurality of terminating resistors connected to the plurality of corresponding data lines, respectively;
a plurality of receiver circuits for detecting the plurality of data from the plurality of data lines, respectively; and
at least one bias generating means for generating a bias voltage to be applied to the plurality of terminating resistors,
the at least one bias generating means sets the bias voltage based on at least one potential among those of the plurality of data lines.

55. A signal transmitting/receiving apparatus according to claim 54, wherein at least one of the plurality of terminating resistors and the at least one bias generating means are connected through a electric resistance.

56. A signal transmitting/receiving apparatus according to claim 54, wherein at least one of the plurality of terminating resistors and the at least one bias generation means are connected through an amplifier.

57. A method for signal transmitting/receiving, using:
a transmitting device for transmitting data;
a receiving device for receiving the data;
a data line for transmitting the data; and
a supply line for transmitting a bias voltage which determines a voltage of the data line,
the method comprising the steps of:
generating the bias voltage at the transmitting device for outputting the bias voltage to the supply line;
outputting the data through a terminating resistor in the receiving device, to the data line connected to the supply line: and
detecting the data from the data line at the receiving device.
